# EUROPEAN PATENT APPLICATION

(11) **EP 2 924 016 A1**
(43) Date of publication of application: **30.09.2015**
(21) Application number: 13856647.6
(22) Date of filing: 22.11.2013
(51) Int. Cl.: C04B 35/52, C04B 35/80, C04B 35/83, C01B 31/04

(54) **METHOD FOR CONTROLLING CHARACTERISTICS OF CERAMIC CARBON COMPOSITE, AND CERAMIC CARBON COMPOSITE**

(30) Priority: 26.11.2012 JP 2012257500
(71) Applicant: Toyo Tanso Co., Ltd., Osaka-shi Osaka 555-0011 (JP)
(72) Inventor: MIYAMOTO, Yoshinari, Osaka-shi Osaka 555-0011 (JP); CHEN, Weiwu, Suita-shi Osaka 565-0871 (JP)
(74) Representative: Ter Meer Steinmeister & Partner
(86) International application number: PCT/JP2013/081485
(87) International publication number: WO 2014/081005

(57) **Abstract**

Provided are: a method for controlling characteristics of a ceramic carbon composite in which an interfacial layer of a ceramic is formed throughout a carbonaceous material and the interfacial layer of the ceramic has a continuous three-dimensional network throughout the carbonaceous material; and a ceramic carbon composite whose characteristics have been controlled. In a method for controlling characteristics of a ceramic carbon composite (1) in which an interfacial layer (3) of a ceramic is formed throughout a carbonaceous material (2) and the interfacial layer (3) of the ceramic has a continuous three-dimensional network throughout the carbonaceous material (2), the characteristics of the ceramic carbon composite (1) is controlled by specifying and selecting at least one of a shape, a hardness, and a degree of graphitization of the carbonaceous material Thus, the ceramic carbon composite (1) having the characteristics controlled without depending on the control of manufacturing conditions can be obtained.

## Description

### Technical Field

This invention relates to: a method for controlling characteristics of a ceramic carbon composite which is a composite of graphite and ceramic; and the ceramic carbon composite.

### Background Art

Carbon materials have low specific gravity and excellent heat resistance, corrosion resistance, slidability, electrical conductivity, thermal conductivity, and workability, and are therefore conventionally used in a wide variety of fields including semiconductor technology, metallurgy, mechanical technology, electrotechnology, and nuclear technology.

However, carbon materials generally have a problem in that they are poor in oxidation resistance and strength. To solve this problem, it has been considered to combine a carbon material and another material, such as ceramics, into a composite.

Examples of the combination of a carbon material and a ceramic material into a composite include SiC-coated graphite composites in which a graphite base material is coated with SiC or TaC by a vapor phase reaction or a melt reaction, and the SiC-coated graphite composites are utilized as susceptors for producing compound semiconductors by chemical vapor deposition. Although these products have heat resistance and chemical stability and prevent dust generation from graphite particles, they do not provide increased strength and their production cost is high. Therefore, the products are limited to some applications, such as a susceptor. In addition, it is technically difficult to provide uniform coating on graphite base materials having three-dimensionally complex shapes.

Meanwhile, an SiC/carbon composite has been developed in which porous carbon is impregnated with molten silicon at a high temperature to induce a combustion synthesis reaction and the insides of pores in the porous carbon are thereby converted to SiC (see Patent Literature 1). For this composite, a near-net-shape product can be formed based on a porous carbon material processed in a relatively simple three-dimensional shape, such as a bolt or a nut. However, this composite has a lack of denseness and a rough surface which are characteristic of impregnation materials and also has a high cost. Therefore, the composite is not used much in the present circumstances.

Furthermore, there has recently been developed a sintered C-SiC composite obtained by mixing ultrafine SiC powder having an average particle diameter of 10 to 100 nm and graphite particles and densifying the mixture to have a high density by spark plasma sintering (see Patent Literature 2).This composite is reported to contain 1% to 95% by weight of SiC, have a relative density of 70% to 99.5%, and have a bending strength as high as 100 to 350 MPa. However, this composite has a composite structure in which SiC particles and carbon particles are uniformly mixed, and does not rely on the concept that a composite is formed to separate the interfaces between carbon particles by a ceramic. In addition, the type of ceramic used is limited to SiC.

Of carbon composites, C/C composites obtained by impregnating carbon fiber fabric with pitch and firing it and composites impregnated with resin are widely used. Although these composites have excellent strength, they do not achieve improved oxidation resistance and, therefore, the use of them in air at high temperatures is limited. In addition, these composites have rough surface, are difficult to process, and take a long time to be produced.

To cope with this, the applicant has developed a ceramic carbon composite in which an interfacial layer of a ceramic is formed throughout a carbonaceous material and the interfacial layer of the ceramic has a continuous three-dimensional network throughout the carbonaceous material (see Patent Literature 3). This composite is lighter than ceramics, excellent in oxidation resistance, resistance to dust generation, thermal conductivity, electrical conductivity, strength, denseness, and so on, and thus has characteristics that can solve the aforementioned problems of the conventional techniques. However, because the carbonaceous material and the ceramic material are firmly joined to each other, the flexibility of its manufacturing process is restricted. Therefore, the composite has difficulty exercising the control over manufacturing conditions, which is a usual practice for controlling the characteristics, and therefore may have difficulty controlling the characteristics of the composite.

### Citation List

### Patent Literature

Patent Literature 1: JP-A-S60-25569
Patent Literature 2: JP-A-2004-339048
Patent Literature 3: JP-A-2011-051867

### Summary of Invention

### Technical Problem

An object of the present invention is to provide: a method for controlling characteristics of a ceramic carbon composite in which an interfacial layer of a ceramic is formed throughout a carbonaceous material and the interfacial layer of the ceramic has a continuous three-dimensional network throughout the carbonaceous material; and a ceramic carbon composite whose characteristics have been controlled.

### Solution to Problem

A method for controlling characteristics of a ceramic carbon composite according to a first aspect of the present invention is a method for controlling characteristics of a ceramic carbon composite in which an interfacial layer of a ceramic is formed throughout a carbonaceous material and the interfacial layer of the ceramic has a continuous three-dimensional network throughout the carbonaceous material, wherein the characteristics of the ceramic carbon composite is controlled by specifying and selecting at least one of a shape, a hardness, and a degree of graphitization of the carbonaceous material.

A ceramic carbon composite according to a second aspect of the present invention is a ceramic carbon composite in which an interfacial layer of a ceramic is formed throughout a carbonaceous material and the interfacial layer of the ceramic has a continuous three-dimensional network throughout the carbonaceous material, wherein the carbonaceous material is carbon fibers.

### Advantageous Effects of Invention

The method for controlling characteristics according to the present invention can control the characteristics of the ceramic carbon composite, without depending on the control of manufacturing conditions, by selecting an appropriate carbonaceous material.

Furthermore, the present invention can provide a ceramic carbon composite whose characteristics have been easily controlled by controlling the physical characteristics, fiber length, or so on of the carbon fiber.

### Brief Description of Drawings

[Fig. 1] Fig. 1 is a schematic cross-sectional view showing a ceramic carbon composite in an embodiment according to the present invention.
[Fig. 2] Fig. 2 is scanning electron micrographs showing respective cross sections of ceramic carbon composites in examples according to the present invention.
[Fig. 3] Fig. 3 is scanning electron micrographs showing respective cross sections of ceramic carbon composites in examples according to the present invention.

### Description of Embodiments

Hereinafter, the present invention will be described with reference to a specific embodiment; however, the present invention is not limited by the following embodiment.

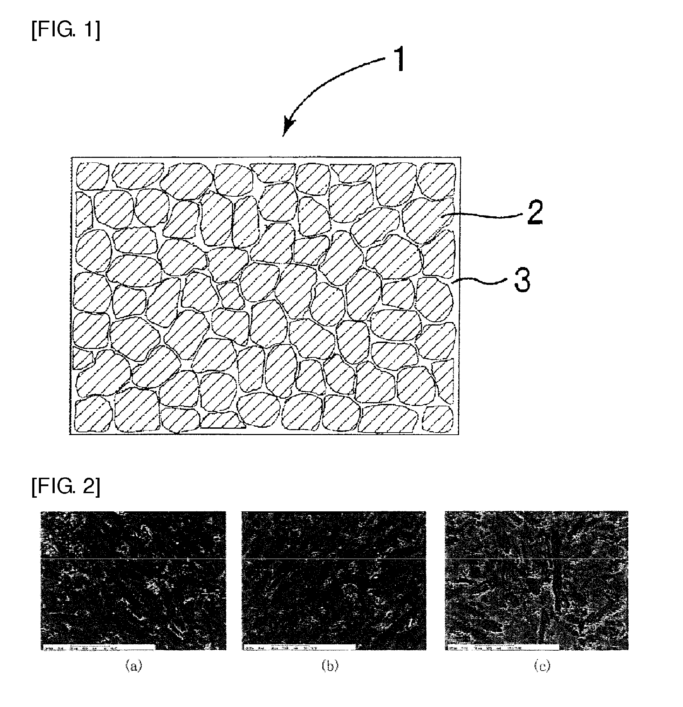

Fig. 1 is a schematic cross-sectional view showing a ceramic carbon composite in an embodiment according to the present invention.

As shown in Fig. 1, the ceramic carbon composite 1 is formed by disposing a ceramic interfacial layer 3 between carbon particles 2 of or containing graphite. The ceramic interfacial layer 3 forms a continuous three-dimensional network between the carbon particles 2. The ceramic material forming the ceramic interfacial layer 3 is excellent in oxidation resistance, heat resistance, wear resistance, strength, and other characteristics. Therefore, the ceramic interfacial layer 3 forming a continuous three-dimensional network can improve these characteristics of the ceramic carbon composite 1.

The carbonaceous material 2 that can be appropriately used is a particulate form of a carbon material of relatively low degree of graphitization, such as petroleum-derived green coke, coal-derived green coke, calcined coke, needle coke, any other type of coke, char, soot, or glasslike carbon; or a particulate form of a carbon material of relatively high degree of graphitization, such as natural graphite made of vein graphite, flake graphite, amorphous graphite or the like, or artificial graphite made from coke, mesophase spherule or the like. The characteristics of the ceramic carbon composite 1 can be controlled by using such a carbonaceous material having appropriately specified shape, hardness, and degree of graphitization. The average particle diameter (d50) of the carbonaceous material 2 is preferably about 50 nm to about 500 µm, more preferably about 1 µm to about 250 µm, and still more preferably about 5 µm to about 100 µm. If the average particle diameter (d50) of the carbonaceous material 2 is too small, the carbonaceous material 2 may agglomerate. If the carbonaceous material 2 agglomerates too much, the resultant ceramic carbon composite 1 may not be able to acquire carbon characteristics. On the other hand, if the average particle diameter (d50) of the ceramic carbon composite 2 is too large, the ceramic carbon composite 1 obtained by firing may be reduced in strength. A plurality of pieces of the carbonaceous material 2 may include a single type of carbonaceous material 2 or a plurality of types of carbonaceous materials 2.

Furthermore, the carbonaceous material 2 to be used may be one having an aspect ratio (average long-axis diameter to average short-axis diameter) of 1.5 to 20. When a ceramic carbon composite 1 having a three-dimensional network is formed using a carbonaceous material 2 having the above aspect ratio, the carbonaceous particles 2 are oriented in the long-axis direction and generate anisotropy together with the ceramic interfacial layer 3, so that the characteristics of the ceramic carbon composite can be anisotropic. If the aspect ratio is below 1.5, the aforementioned anisotropy will be difficult to develop. If the aspect ratio is above 20, the carbonaceous material 2 will be very easy to break.

The average long-axis diameter and average short-axis diameter of the carbonaceous material can be measured, for example, by observation with an electronic microscope. For example, the aspect ratio can be determined by measuring the long-axis diameters and short-axis diameters of about 100 pieces of the carbonaceous material 2 and calculating from these values the average long-axis diameter and average short-axis diameter. The average long-axis diameter and average short-axis diameter may be determined by image processing.

The carbonaceous materials having an aspect ratio of 1.5 to 20 include columnar carbonaceous materials and fibrous carbonaceous materials.

The carbonaceous material 2 to be used may be particulate carbon having a wide particle size distribution. If a carbonaceous material 2 having a narrow particle size distribution is used, the ceramic interfacial layer 3 is formed with a uniform thickness to stabilize the characteristics throughout the material. On the other hand, if particulate carbon having a wide particle size distribution is used, the thickness of the ceramic interfacial layer 3 is non-uniform to allow part of the material to have different characteristics, which enables the control to lower mechanical characteristics and so on.

The particle size distribution (i.e., particle diameter distribution) of the carbonaceous material 2 can be determined by image analysis with an electronic microscope, a laser diffraction particle size distribution analyzer or so on.

Furthermore, the preferred carbonaceous material 2 to be used is one having a degree of graphitization of 20% to 100%. When a carbonaceous material 2 of relatively low degree of graphitization is selected, mechanical characteristics of the ceramic carbon composite 1, such as hardness and bending strength, and thermal characteristics thereof, such as thermal conductivity, can be increased. When a carbonaceous material of high degree of graphitization is selected, electrical characteristics of the ceramic carbon composite 1, such as electrical conductivity, can be increased. If the degree of graphitization is below 20%, features of the ceramic carbon composite 1 in terms of electrical and thermal characteristics are difficult to develop.

The degree of graphitization of the carbonaceous material 2 can be determined by measuring the (002) plane spacing of graphite crystal using x-ray diffraction.

Reference: Houska, C. R., Warren, B. E., X-Ray Study of the Graphitization of Carbon Black, J. Appl. Phys. , 1954, 25 (12): 1503-10

Furthermore, the characteristics of the ceramic carbon composite may be controlled using as the carbonaceous material 2 a carbonaceous material having a different hardness. The carbonaceous material having a different hardness that can be used is, for example, a carbonaceous material having a different degree of graphitization.

Alternatively, carbon fibers can be used as the carbonaceous material 2. The carbon fiber is a carbon material whose mechanical, electrical, and thermal characteristics are extremely biased in the fiber length direction and can be a suitable material for developing the anisotropy of the ceramic carbon composite 1. An appropriate type of carbon fiber can be selected according to the characteristics from among PAN-based carbon fiber, pitch-based carbon fiber, vapor-grown carbon fiber, and so on.

The average fiber diameter of the carbon fibers is preferably 1 to 100 µm. If the average fiber diameter is below 1 µm, the mechanical characteristics are difficult to develop. If the average fiber diameter is above 100 µm, it may be difficult to form a ceramic carbon composite 1. Furthermore, the average fiber length of the carbon fibers is preferably 20 to 5000 µm and more preferably 20 to 3000 µm. If the average fiber length is below 20 µm, anisotropy is difficult to develop. If the average fiber length is above 5000 µm, it may be difficult to form a ceramic carbon composite 1 and the carbon fibers may be broken in the middle. The average fiber length is preferably a dimension greater than the fiber diameter. In order that the carbon fibers have such an average fiber diameter and an average fiber length, chopped fibers or milled fibers can be preferably used.

The ceramic carbon composite 1 containing carbon fibers used as the carbonaceous material 2 preferably has a relative density of 90% or more. No ceramic carbon composite 1 having a three-dimensional network formed using carbon fibers of fibrous shape has ever existed before, nor has ceramic carbon composite 1 taking advantage of excellent characteristics of carbon fibers been ever provided before. In contrast, in the present invention, by using carbon fibers having a relative density of 90% or more and preferably 90% to 99%, a ceramic carbon composite 1 can be provided in which the carbon fibers and the ceramic are firmly integrated and which takes advantage of the characteristics of carbon fibers while having the characteristics of the ceramic.

Furthermore, the carbon fibers are preferably contained in an amount of 50% by volume or more and more preferably in a range of amounts of from 50% to 80% by volume. If the content of carbon fibers is below 50% by volume, the characteristics of carbon fibers are difficult to develop and a light composite is difficult to obtain.

When control is exercised over the type, shape, and size of the carbonaceous particles 2, the type of the ceramic material forming the ceramic interfacial layer 3, and the thickness and the three-dimensional continuity of the ceramic interfacial layer, the oxidation resistance, wear resistance, strength, bulk density, and others of the ceramic carbon composite material 1 can be increased and the electrical conductivity, thermal conductivity, and other characteristics thereof can be controlled to higher or lower values than desired.

When a ceramic material having electrical insulation, such as AlN, Al₂O₃, SiC, Si₃N₄, SiO₂, or ZrO₂, is used as a ceramic material forming the ceramic interfacial layer 3 to form a continuous three-dimensional network in which the carbonaceous particles 2 are fully coated with the ceramic interfacial layer 3, the ceramic carbon composite material 1 can have the characteristics of the ceramic. Furthermore, when SiC or ZnO is used as a ceramic material forming the ceramic interfacial layer 3 and the thickness of the ceramic interfacial layer 3 is as thin as several hundreds of nanometers, the ceramic carbon composite 1 can be given a varistor effect so that upon application of a voltage exceeding a certain level, it generates a tunnel current or a Schottky current in the ceramic interfacial layer 3 to exhibit a nonlinear current-voltage characteristic, and these characteristics can be controlled.

The ceramic carbon composite 1 shown in Fig. 1 can be produced by forming a green body made of ceramic-coated powder in which carbonaceous particles 2 are coated with individual ceramic layers made of the ceramic material for forming the ceramic interfacial layer 3 and then sintering the green body. If the ceramic interfacial layer 3 is made of silicon carbide, the method may be used of mixing silicon nitride, a carbonaceous material, and a binder, forming the mixture containing the pieces of carbonaceous material on the surfaces of which silicon nitride is deposited, and firing the formed green body with the application of pressure to convert silicon nitride to silicon carbide.

Next, a description will be given of an example of a method for manufacturing a ceramic carbon composite 1.

### (Green Body Producing Step)

A green body is produced which contains pieces of carbonaceous material 2 with a ceramic deposited on their surfaces.

No particular limitation is placed on the form of the ceramic to be deposited on the surfaces of the pieces of carbonaceous material 2. For example, the forms of the ceramic include a particulate form and a film form.

If the ceramic is in a particulate form, its average particle diameter is preferably about 50 nm to about 10 µm and more preferably about 100 nm to about 1 µm.

The average particle diameter of the ceramic is preferably in a range of from 1/100 to 1/5 of the average particle diameter of the carbonaceous material 2. In this case, substantially the entire surface of each of the pieces of carbonaceous material 2 can be covered with the ceramic. The average particle diameter of the ceramic is more preferably in a range of from 1/50 to 1/10 of average particle diameter of the carbonaceous material 2 and still more preferably in a range of from 1/40 to 1/20 of the same.

The mixture ratio between the ceramic and the carbonaceous material 2 (the volume of the ceramic to the volume of the carbonaceous material 2 (volume ratio)) is preferably 5:95 to 50:50 and more preferably 10:90 to 30:70.

No particular limitation is placed on the method for depositing the ceramic on the surfaces of the pieces of carbonaceous material 2. For example, it is sufficient to mix the carbonaceous material 2 and the ceramic. Specific examples of the mixing include a gas phase method, a liquid phase method, a mechanical mixing method of mixing the ceramic and the carbonaceous material 2 using a mixer or the like, a slurry method, and a combined method of them. Specific examples of the gas phase method include the chemical vapor deposition method (CVD method) and the conversion method (CVR method). A specific example of the liquid phase method is the chemical precipitation method. Specific examples of the slurry method include, for example, gel-casting, slip-casting, and tape-casting.

No particular limitation is placed on the method for forming the carbonaceous material 2 in which a ceramic is deposited on the surfaces of the pieces thereof. For example, using the gel-casting method, the deposition of the ceramic on the surfaces of the pieces of carbonaceous material 2 and the forming of the carbonaceous material 2 can be concurrently performed and the carbonaceous material 2 can be prevented from being broken and thus can retain its shape. In the gel-casing method, a solvent, which is a liquid, and a binder are mixed to prepare a slurry, the carbonaceous material is added into the slurry and mixed together, and the mixture is dried to obtain a solid mixture. For example, carbon powder and ceramic powder are added to an isopropanol organic solvent to which acrylamide and N,N'-methylenebisacrylamide are added as binders, or the carbon powder and the ceramic powder are added to methanol serving as both a binder and an organic solvent. The mixture is stirred in a planetary centrifugal mixer to prepare a slurry and the slurry is poured into a die and dried, resulting in a green body.

### (Firing Step)

Next, the green body is fired. Examples of a firing method that can be used include spark plasma sintering, pressureless sintering, and hot pressing. Among them, spark plasma sintering is convenient because it enables high-density sintering in a short period of time of 2 to 60 minutes.

In the case of using spark plasma sintering, the firing temperature and firing time of the green body, the type of firing atmosphere, the pressure in the firing atmosphere, and so on can be appropriately selected depending upon the types, shapes, sizes, and so on of the materials used. It is sufficient that the firing temperature is, for example, 1700°C or above. The firing temperature is preferably about 1700°C to about 2100°C and more preferably about 1800°C to 2000°C. The firing time can be, for example, about five minutes to about two hours. The type of firing atmosphere can be, for example, a vacuum atmosphere or an inert gas atmosphere, such as nitrogen or argon. The pressure in the firing atmosphere can be, for example, about 0.01 MPa to about 10 MPa.

In the firing step, a ceramic interfacial layer 3 is formed on the surfaces of the pieces of carbonaceous material 2. During this, the ceramic interfacial layer 3 is formed between the plurality of pieces of carbonaceous material 2. Specifically, in the firing step, the plurality of pieces of carbonaceous material 2 are covered with the ceramic interfacial layer 3 and connected together by the ceramic interfacial layer 3. Note that Si₃N₄ or the like may be left partly unconverted in the ceramic carbon composite 1.

Examples

Hereinafter, the present invention will be described in more detail with reference to specific examples; however, the present invention is not limited by the following examples.

### (Example 1)

A mixed powder of 10 g of artificial graphite particles (mesophase graphite having a particle diameter distribution (d10 to d90) of 15 to 20 µm and a degree of graphitization of 67%, manufactured by Toyo Tanso Co., Ltd.), 3.55 g of aluminum nitride powder (having a particle diameter distribution (d10 to d90) of 1 to 5 µm), and Y₂O₃ (0.19 g) as a sintering aid and a binder solution (2.84 g) prepared by dissolving acrylamide (8 g) and N,N'-methylenebisacrylamide (1 g) in isopropanol (45 g) were mixed by the gel-casting method and the mixture was cast in a plastic mold. The volume ratio between carbonaceous material and ceramic in the mixture was 80:20. The obtained mixture was dried at 80°C for 12 hours under ordinary pressure to obtain a green body. Next, using the spark plasma sintering method, the green body was sintered under vacuum by passage of pulse current at 2000°C for five minutes under vacuum condition with the application of a pressure of 30 MPa, resulting in a ceramic carbon composite A.

### (Example 2)

A ceramic carbon composite B was obtained in the same manner as in Example 1 except that artificial graphite particles (powder of cutting residue having a particle diameter distribution (d10 to d90) of 2 to 100 µm and a degree of graphitization of 83%, manufactured by Toyo Tanso Co., Ltd.) was used as a carbonaceous material.

### (Example 3)

A ceramic carbon composite C was obtained in the same manner as in Example 1 except that artificial graphite particles (pulverized graphite material powder of an aspect ratio of 3.5 and a degree of graphitization of 98%, manufactured by Toyo Tanso Co., Ltd.) was used as a carbonaceous material.

### (Example 4)

A ceramic carbon composite D was obtained in the same manner as in Example 1 except that natural graphite particles (having a particle diameter distribution (d10 to d90) of 15 to 20 µm and a degree of graphitization of 92%, manufactured by Toyo Tanso Co., Ltd.) was used as a carbonaceous material.

The obtained ceramic carbon composites A to D were measured in terms of bulk density, relative density, bending strength, and thermal conductivity in the following manners. The results are shown in Table 1.

### [Bulk Density]

The bulk density was measured by the Archimedes' method. Specifically, the bulk density was measured in accordance with JIS A 1509-3.

### [Relative Density]

The relative density was calculated from the ratio between the bulk density measured in the above manner and the theoretical density of the same sample (density thereof in a pore-free state) (see JIS Z 2500-3407).

### [Bending Strength]

The bending strength was measured by the three-point bending test. Specifically, the bending strength was measured in accordance with JIS A 1509-4. Test pieces were taken from portions parallel and perpendicular to the direction of pressure applied by the spark plasma sintering method and the bending strength was measured in terms of each of the parallel and perpendicular directions.

### [Thermal Conductivity]

The thermal conductivity was measured by the laser flash method. Specifically, the thermal conductivity was measured in accordance with JIS R 1650-3. Like the bending test, the thermal conductivity was measured in terms of each of the directions parallel and perpendicular to the direction of pressure applied by the spark plasma sintering method.

**[Table 1]**

| | Particle Diameter Distribution of Carbonaceous Material | Carbon (Vol%) | Ceramic (Vol%) | Bulk Density (g/cm³) | Relative Density (%) | Bending Strength (MPa) | | Thermal Conductivity (W·m/K) | |
|---|---|---|---|---|---|---|---|---|---|
| | (*µ*m) | | | | | Parallel | Perpendicular | Parallel | Perpendicular |
| Ex. 1 | 15∼20 | 80 | 20 | 2.34 | 98 | 99.7 | 101.4 | 169 | 160 |
| Ex. 2 | 2∼100 | 80 | 20 | 2.14 | 90 | 61.2 | 59.8 | 65.2 | 77.5 |
| Ex. 3 | 5∼100 | 80 | 20 | 2.33 | 98 | 57.3 | 55.3 | 66.7 | 204.4 |
| Ex. 4 | 15∼20 | 80 | 20 | 2.31 | 97 | 45.5 | 47.2 | 122.4 | 146.1 |

Examples 1 to 4 are common in that they were manufactured in the same conditions and the ceramic interfacial layer had a three-dimensional network, but significantly different from each other in the characteristics of the resultant ceramic carbon composites. This obviously shows that the control over the characteristics can be exercised by changing the carbonaceous material. Although in Examples 1 and 4 carbonaceous materials having the same diameter were used, Example 1 exhibited a higher bending strength and a higher thermal conductivity because of a difference in the degree of graphitization and Example 4 exhibited a lower bending strength and a lower thermal conductivity because of the use of a carbonaceous material of a high degree of graphitization, i.e., a soft carbonaceous material. Because the thermal conductivity depends not only on the degree of graphitization of the graphite source material but also on the density of the produced material and so on, it is difficult to determine influences of the source graphite on the thermal conductivity based simply on the results of Examples 1 and 4. At any rate, it can be seen that the use of the carbonaceous material having a uniform graphite particle size and a low degree of graphitization can increase the bending strength.

Since Example 2 contained a mixture of carbonaceous material pieces of various particle diameters, it can be estimated from its low relative density that sites relatively insufficient to form a ceramic interfacial layer were created. Therefore, both the bending strength and the thermal conductivity stay at low levels. Hence, it can be seen that the use of a carbonaceous material having a wide particle diameter distribution can control the bending strength and the thermal conductivity to be low and the use of a carbonaceous material having a narrow particle diameter distribution can increase the bending strength and the thermal conductivity.

Since in Example 3 a carbonaceous material of an aspect ratio of 1.5 to 20 was used, the pressure applied by pressing in the spark plasma sintering method aligned the direction of the long axis with the direction perpendicular to the method of the applied pressure, so that Example 3 exhibited a large value of thermal conductivity specifically in the perpendicular direction. Therefore, it can be seen that the use of a carbonaceous material of an aspect ratio of 1.5 to 20 can increase the thermal conductivity in a specific direction.

The ceramic carbon composite C of Example 3 exhibited, because of the use of a carbonaceous material of an aspect ratio of 3.5 and a degree of graphitization of 98%, a thermal conductivity ratio between the parallel and perpendicular directions of approximately 3.5 close to the aspect ratio. The ceramic carbon composite D of Example 4, in which a carbonaceous material of an aspect ratio of approximately 1 and a degree of graphitization of 96% was used, exhibited a thermal conductivity ratio between the parallel and perpendicular directions of approximately 1.2. This reveals that the use of a carbonaceous material of a high degree of graphitization can control the thermal conductivities in the parallel and perpendicular directions based on the aspect ratio of the carbonaceous material. In performing such a control, it is preferred that the degree of graphitization be 90% or more and the aspect ratio be 2 to 15, and it is more preferred that the degree of graphitization be 95% or more and the aspect ratio be 3 to 10.

Fig. 2 shows photographs of Examples 1 to 4 subjected to surface polishing. Here, a) to d) correspond to Examples 1 to 4, respectively, wherein the dark-tone portion is a carbonaceous material and the pale-tone portion is a ceramic interfacial layer. In a) (Example 1), because continuous sintering of the ceramic progressed, the carbonaceous material and the ceramic interfacial layer can be clearly distinguished from each other. On the other hand, in b) (Example 2), because of the existence of pieces of carbonaceous material of small particle diameter, an interfacial layer of mixture of carbon and ceramic was formed and the ceramic was left partly unsintered. In c) (Example 3), it can be estimated, although the right-to-left direction of the photograph is the parallel direction, that the carbonaceous material was oriented in the perpendicular direction.

Next, examples are shown below in which carbon fibers were used as the carbonaceous material 2.

### (Example 5)

A mixed powder of pitch-based carbon fibers (10 g) (milled fiber K223HM of an average fiber diameter of 11 µm and an average fiber length of 50 µm, manufactured by Mitsubishi Plastics, Inc.), silicon nitride (Si₃N₄ manufactured by Ube Industries, Ltd., 4.63 g), and Al₂O₃ (0.39 g) and Y₂O₃ (0.19 g) as sintering aids and ethanol (5.19 g) were mixed by the gel-casting method and the mixture was cast in a plastic mold. The volume ratio between carbon fibers and ceramic in the mixture was 70:30. The obtained mixture was dried at 80°C for 12 hours under ordinary pressure to obtain a green body. Next, using the spark plasma sintering method, the green body was sintered under vacuum by passage of pulse current at 2000°C for five minutes under vacuum condition with the application of a pressure of 30 MPa. As a result, a ceramic carbon composite E was obtained.

### (Example 6)

A mixed powder of carbon fibers (10 g) of the same type as in Example 5, silicon nitride (9.1 g) of the same type as in Example 5, and Al₂O₃ (0.6 g) and Y₂O₃ (0.3 g) as sintering aids and ethanol (6.06 g) were mixed by the gel-casting method and the mixture was cast in a plastic mold. The volume ratio between carbon fibers and ceramic in the mixture was 60:40. The obtained mixture was dried at 80°C for 12 hours under ordinary pressure to obtain a green body. Next, using the spark plasma sintering method, the green body was sintered under vacuum by passage of pulse current at 2000°C for five minutes under vacuum condition with the application of a pressure of 30 MPa. As a result, a ceramic carbon composite F was obtained.

### (Example 7)

A mixed powder of carbon fibers (10 g) of the same type as in Example 5, silicon nitride (13.65 g) of the same type as in Example 5, and Al₂O₃ (0.9 g) and Y₂O₃ (0.9 g) as sintering aids and ethanol (7.27 g) were mixed by the gel-casting method and the mixture was cast in a plastic mold. The volume ratio between carbon fibers and ceramic in the mixture was 50:50. The obtained mixture was dried at 80°C for 12 hours under ordinary pressure to obtain a green body. Next, using the spark plasma sintering method, the green body was sintered under vacuum by passage of pulse current at 2000°C for five minutes under vacuum condition with the application of a pressure of 30 MPa. As a result, a ceramic carbon composite G was obtained.

### (Example 8)

A ceramic carbon composite H was obtained in the same manner as in Example 5 except that carbon fibers having an average fiber length of 200 µm were used as carbon fibers instead of those having an average fiber length of 50 µm.

### (Example 9)

A ceramic carbon composite I was obtained in the same manner as in Example 2 except that silicon carbide powder (having a particle diameter distribution of 1 to 5 µm) was used instead of silicon nitride.

### (Comparative Example 1)

A ceramic carbon composite J was obtained in the same manner as in Example 5 except that artificial graphite having a particle diameter distribution of 15 to 20 µm were used instead of carbon fibers.

The obtained ceramic carbon composites E to J were measured in terms of bulk density, relative density, bending strength, and thermal conductivity in the same manners as carried out in Examples 1 to 4. In relation to the bending strength, the states of the test pieces after the test were observed, wherein the fully separated test pieces were determined to be broken whereas the unseparated test pieces were determined to be not broken. The bending strength and the thermal conductivity were measured only in terms of the direction perpendicular to the direction of pressure applied by the spark plasma sintering method. The results are shown in Table 2.

**[Table 2]**

| | Carbon Fibers (Vol %) | Ceramic (Vol %) | Bulk Density (g/cm³) | Relative Density | Bending Strength (MPa) | State After Bending Test | Thermal Conductivity (W·m/K) |
|---|---|---|---|---|---|---|---|
| Ex. 5 | 70 | 30 | 2. 37 | 95 | 128 | Not Broken | 81 |
| Ex. 6 | 60 | 40 | 2. 56 | 98 | 170 | Not Broken | 73 |
| Ex. 7 | 50 | 50 | 2. 7 | 99 | 215 | Not Broken | 63 |
| Ex. 8 | 60 | 40 | 2. 47 | 96 | 214 | Not Broken | 75 |
| Ex. 9 | 60 | 40 | 2. 54 | 98 | 99 | Not Broken | 68 |
| Comp. Ex. 1 | 70 | 30 | 2. 43 | 98 | 150 | Broken | 138 |

The ceramic carbon composites in Examples 5 to 8 showed a tendency to increase the bending strength with increasing ceramic content and Example 8 containing carbon fibers of long fiber length showed a greater bending strength than Example 6. Therefore, it is obvious that the control over the characteristics with the use of carbon fibers can be exercised. Furthermore, whereas the test piece in the comparative example was broken after the bending test, the test pieces in all of Examples were not broken after the bending test and therefore show an advantage in terms of retaining the shape against fracture. Hence, it can be seen that the use of carbon fibers as the carbonaceous material can provide a ceramic carbon composite having such an excellent shape retention against fracture that its test piece is not broken even when undergoing the bending test.

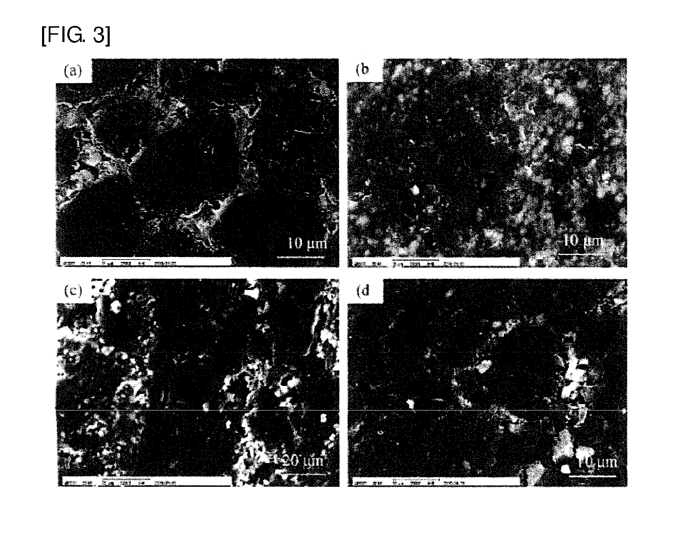

Fig. 3 shows photographs of Examples 5 to 7 subjected to surface polishing. Here, a) to c) correspond to Examples 5 to 7, respectively, wherein the dark-tone portion is a carbonaceous material and the pale-tone portion is a ceramic interfacial layer. It can be clearly seen from the figure that in all of these examples a ceramic interfacial layer was formed with substantially no space around carbon fibers to increase the relative density. In addition, it can be estimated that as the content of carbon fibers increases, the carbon fibers have a greater tendency to be oriented in a single direction.

Next, examples are shown below in which thermally treated graphite particles were used as the carbonaceous material 2.

### (Example 10)

Artificial graphite particles (mesophase graphite having a particle diameter distribution (d10 to d90) of 15 to 20 µm, manufactured by Toyo Tanso Co., Ltd.) as a carbonaceous material were thermally treated at 1200°C under an inert gas atmosphere. A mixed powder of 10 g of the above graphite after the thermal treatment, 5.96 g of aluminum nitride powder (having a particle diameter distribution (d10 to d90) of 1 to 5 µm), and Al₂O₃ (0.39 g) and Y₂O₃ (0.20 g) as sintering aids and a binder solution (2.84 g) prepared by dissolving acrylamide (8 g) and N,N'-methylenebisacrylamide (1 g) in isopropanol (45 g) were mixed by the gel-casting method and the mixture was cast in a plastic mold. The volume ratio between carbonaceous material and ceramic in the mixture was 70:30. The obtained mixture was dried at 80°C for 12 hours under ordinary pressure to obtain a green body. Next, using the spark plasma sintering method (SPS method), the green body was sintered under vacuum by passage of pulse current at 2000°C for five minutes under vacuum condition with the application of a pressure of 30 MPa, resulting in a ceramic carbon composite K.

### (Example 11)

A ceramic carbon composite L was obtained in the same manner as in Example 10 except that the thermal treatment under the inert gas atmosphere was at 2300°C.

### (Example 12)

A ceramic carbon composite M was obtained in the same manner as in Example 10 except that the thermal treatment under the inert gas atmosphere was at 2500°C and the degree of graphitization was 67%.

The obtained ceramic carbon composites K to M were measured in terms of bulk density, relative density, bending strength, and thermal conductivity in the same manners as carried out in Examples 1 to 4. In addition, the ceramic carbon composites were also measured in terms of Shore hardness in the following manner. In relation to the bending strength, the states of the test pieces after the test were observed, wherein the fully separated test pieces were determined to be broken whereas the unseparated test pieces were determined to be not broken. The bending strength and the thermal conductivity were measured only in terms of the direction perpendicular to the direction of pressure applied by the spark plasma sintering method. The aforementioned ceramic carbon composite J was used as a material for comparison. The results are shown in Table 3.

### [Shore Hardness]

The Shore hardness was measured with a Shore hardness tester Model-D (manufactured by Nakai Precision Machinery Mfg. Co., Ltd.; Model No. 20309). Each test piece was measured at five points and the average of the measured values at three points except for the maximum and minimum values was adopted as the Shore hardness. Specifically, the Shore hardness was measured in accordance with JIS Z 2246.

**[Table 3]**

| | Carbon Particles (Vol%) | Ceramic (Vol %) | Bulk Density (g/cm3) | Relative Density (%) | Shore Hardness (-) | Bending Strength (MPa) | Thermal Conductivity (W·m/K) |
|---|---|---|---|---|---|---|---|
| Ex. 10 | 70 | 30 | 2. 43 | 98 | 68 | 220 | 93 |
| Ex. 11 | 70 | 30 | 2. 42 | 97 | 59 | 173 | 98 |
| Ex. 12 | 70 | 30 | 2. 46 | 98 | 54 | 151 | 166 |
| Comp. Ex. 1 | 70 | 30 | 2. 43 | 98 | 45 | 150 | 138 |

The ceramic carbon composites of Examples 10 and 11 had lower thermal conductivities but exhibited higher values in terms of bending strength and Shore hardness than the comparative example. This shows that the use of a carbonaceous material of low degree of graphitization can increase the physical characteristics. Furthermore, the ceramic carbon composite of Example 12 having a degree of graphitization increased by the thermal treatment had lower physical characteristics but exhibited a higher value in terms of thermal conductivity than Examples 10 and 11, which shows that the characteristics of the ceramic carbon composite can be controlled by what carbon particles are used.

### Reference Signs List

1...ceramic carbon composite
2...carbon particle
3...ceramic interfacial layer

## Claims

1. A method for controlling characteristics of a ceramic carbon composite in which an interfacial layer of a ceramic is formed throughout a carbonaceous material and the interfacial layer of the ceramic has a continuous three-dimensional network throughout the carbonaceous material,
wherein the characteristics of the ceramic carbon composite is controlled by specifying and selecting at least one of a shape, a hardness, and a degree of graphitization of the carbonaceous material.

2. The method for controlling characteristics of a ceramic carbon composite according to claim 1, wherein the carbonaceous material has an aspect ratio (average long-axis diameter to average short-axis diameter) of 1.5 to 20.

3. The method for controlling characteristics of a ceramic carbon composite according to claim 1, wherein carbon fibers are used as the carbonaceous material.

4. The method for controlling characteristics of a ceramic carbon composite according to claim 3, wherein the carbon fibers have an average fiber length of 20 to 5000 µm.

5. The method for controlling characteristics of a ceramic carbon composite according to claim 1 or 2, wherein the carbonaceous material has a degree of graphitization of 20% to 100%.

6. A ceramic carbon composite in which an interfacial layer of a ceramic is formed throughout a carbonaceous material and the interfacial layer of the ceramic has a continuous three-dimensional network throughout the carbonaceous material, wherein the carbonaceous material is carbon fibers.

7. The ceramic carbon composite according to claim 6, having a relative density of 90% or more.

8. The ceramic carbon composite according to claim 6 or 7, containing the carbon fibers in an amount of 50% by volume or more.

9. The ceramic carbon composite according to any one of claims 6 to 8, wherein the carbon fibers have an average fiber length of 20 to 5000 µm.
